# EUROPEAN PATENT SPECIFICATION

(11) **EP 1 134 116 B1**
(45) Date of publication and mention of the grant of the patent: **28.12.2005**
(21) Application number: 00500119.3
(22) Date of filing: 08.06.2000
(51) Int. Cl.: B60N 3/00

(54) **Shelf for the back part of the backrest in a vehicle**
Regal für die Hinterseite einer Rückenlehne eines Fahrzeuges
Tablette pour la partie arrière d'un dossier dans un véhicule

(30) Priority: 13.03.2000 ES 200000592
(43) Date of publication of application: 19.09.2001
(73) Proprietor: Möllertech S.A., 01470 Amurrio/Alava (ES); Peugeot Citroen Automobiles SA, 92200 Neuilly sur Seine (FR)
(72) Inventor: Gonzalez Garcia, Jesus, 01470 Amurrio (Alava) (ES)
(74) Representative: Flaccus, Rolf-Dieter

(56) References cited:
- DE-A- 3 000 366
- DE-A- 3 623 163
- DE-A- 19 848 889
- DE-C- 3 421 547
- US-A- 2 132 279
- US-A- 3 877 747

## Description

### PURPOSE

The purpose of this request for a Patent is a shelf for the back part of the backrest in a vehicle that provides various advantages for the object for which it is intended, to be detailed later one, apart from others inherent to its organization and constitution.

More specifically, the invention proposes a shelf to be attached to the back part of the front backrest of vehicle to offer the passenger seated in the back seat the possibility of placing objects, to use it as a writing desk, both for writing as well as installing a portable computer, as a glass holder, etc., at the same time as it provides a useful surface for placing various elements. A small hook for hanging a bag, clothing, etc. has been provided on the side.

### HISTORY

At present, and as a reference to the state-of-the-art, it should be mentioned that other shelves are known, consisting of articulated platforms installed on the back part of airplane seats adopting two fixed positions, one which is embedded in the airplane seat when the shelf is not being used and the other horizontal, when the shelf is used, normally as a support to place objects such as glasses with drinks and others.

DE-A1-3623163 discloses a shelf for the back part of a backrest in a vehicle, consisting of a support which is attached to the backrest, and the shelf itself. The shelf is mounted on the support in such way that it is pivotable and can adopt either a horizontal position, when it is in use, or a vertical position, when it is not in use. The shelf is mounted to the support by means of two bearing brackets which are arranged on the sides of the support and which are provided with stops which serve to stabilize the shelf when it is moved into its horizontal position. The bearing brackets are provided with axles which are suitable to be received inside lateral grooves in the form of runners which are provided for this purpose at both sides of the shelf. When the shelf is pulled to the bottom of the runners, it can be turned around the axles until it adopts a horizontal position where it is stabilized by means of said stops. By turning the shelf into its vertical position and applying a slight downward pressure on its upper part, the shelf brought into its vertical position. When it is in the vertical position, the shelf is not stabilized and may swing freely around the axles, which may cause disturbing noises. The support is typically made of sheet steel, the bearing brackets are preferably made of molded plastic, and the shelf may be made of wood.

The problem underlying the present invention was to provide a shelf as defined in the preamble of claim 1 but having a reduced tendency to produce noise. This problem is solved by means of the combination of features mentioned in the characterizing part of claim 1, as well as by the embodiments described in the subclaims.

### DESCRIPTION OF THE INVENTION

The shelf for the back part of the backrest of a vehicle, purpose of the invention, basically consists of two molded material components: a fixed part, the support, the function of which is to secure the shelf which ends up attached to the framework of the seat; and another part, movable, which is the shelf itself, mounted on a support and with two possible positions, one unfolded so that it can be used and the other folded, in the closed position.

As regards the general characteristics it should be mentioned that the support can include an adornment in the center which can optionally have the initials of the vehicle or an anagram, so that when the shelf is open and being used this can be seen.

In the closed position, the set has a correct adjustment between the two parts so that no noise is produced when the vehicle is in movement.

It should be mentioned that the set has been conceived so that opening of the shelf is made by sliding two axles located on the sides of the support and inside lateral grooves in the form of runners, provided for this purpose on the shelf when the shelf is pulled down to the bottom of the runners it turns on the axles and is placed in the horizontal position, with the peculiarity that maintaining it in the position to used is obtained with the help of a butt on the support and a lateral support level with the axles.

The end of the axles has a special sloping surface forming a certain angle with the horizontal, which serves as a support for the shelf and this, in turn, adopts a complementary surface on the lower end of the bottom of the strip.

In order to close the shelf, it has to be returned to its vertical position and then slight pressure is applied downwards on its upper part to close it.

This shelf is conceived to offer the user the possibility of having an accessory that breaks loose in the case of overloading To guarantee this option, the support is provided with a mechanism consisting of the movable axle located on one side, whilst the axle of the other side is fixed. This system is integrated in a box located on the invisible part of the mechanism and is controlled by a spring that allows the movable axle to slide laterally. As the load on the shelf increases, the spring starts to be compressed and causes the axle to withdraw and forces the shelf to slide along the sloping surface of the axle towards the end, so that when there is a certain load the distance traveled by the axle is such that the support is not sufficient and the shelf becomes unhooked and falls, without the set suffering any damage

Afterwards, it is possible to mount the shelf on the support by means of a very simple operation. It is sufficient to place the fixed axle on the corresponding side at the bottom of the groove of the shelf and on the other side place the lower part of the shelf on the movable axle, so that by applying a slight pressure on the upper part of the shelf the movable axle is forced to enter in its box and lets the shelf descend, thus finally allowing it to be housed in the runner and available to be used again.

In order to mount the support on the frame of the seat, this has two arches on the back part that are inserted into the supports of the corresponding headrest. Anchoring on the cross piece is made with the help of two anchoring points located on the ends of the part in the curved area underneath the adornment and covered by the shelf. In order to guarantee the support operates correctly, a centering device has been provided which is housed on top of the cross piece, on the invisible face, to avoid the part tilting during mounting.

In order to complement the following description and for the purpose of helping to better understand the characteristics of the invention, this descriptive report includes a set of drawings in which the most significant details of the invention have been represented in an illustrative and unlimited way:

### BRIEF DESCRIPTION OF THE DRAWINGS

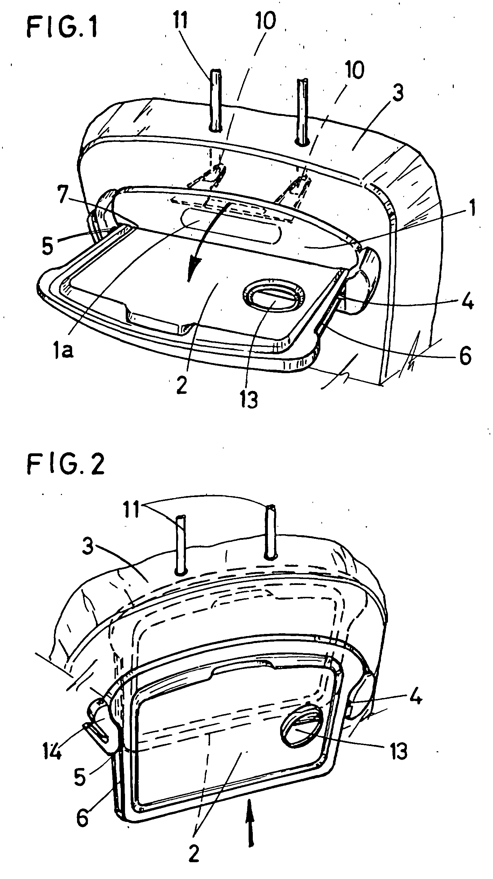

Figure 1 shows a perspective view of a practical performance of the invention with the shelf in the operative position or in use.
Figure 2 shows a perspective view of a practical performance in which the shelf appears in the closed position.

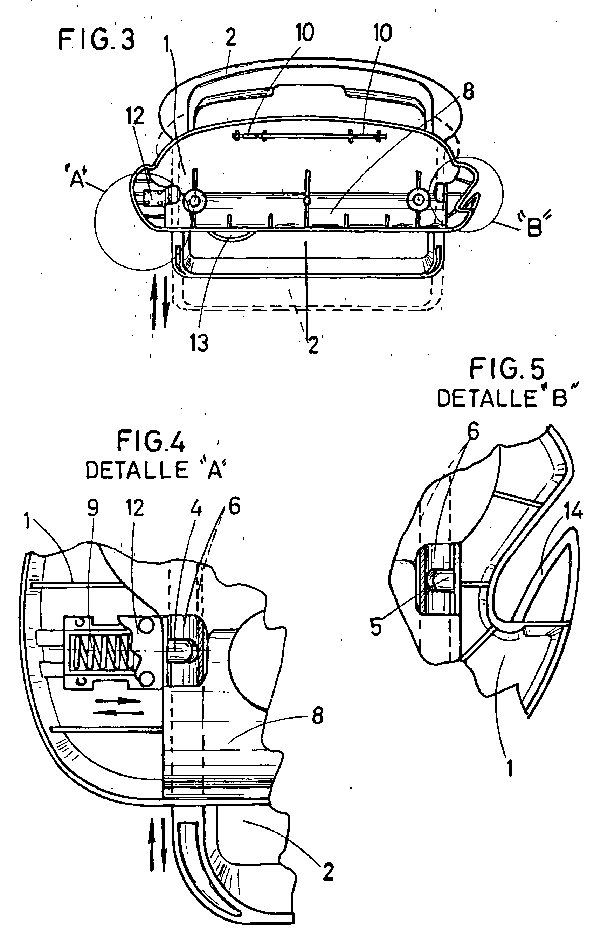

Figure 3 shows an elevated back view in which the operating mode of the invention is indicated, as well as its main components.
Figure 4 shows the detail indicated as "A" in figure 3 above.
Figure 5 shows the detail indicated as "B" in figure 3 above.

### DESCRIPTION OF A PERFORMANCE EXAMPLE OF THE INVENTION

In view of the figures indicated above and in accordance with the numbering used, a performance example of the invention can be seen, which consists of a shelf for the back part of the backrest in a vehicle composed mainly of two parts -1- and -2- of molded material, including a fixed part corresponding to a support -1- that secures the shelf and is attached to the frame of the seat -3-, and a movable part consisting of the shelf -2- itself which is mounted on the support -1-, so that two stable positions can be adopted, one unfolded for its use and the other folded, in the closed position, thus obtaining a perfect adjustment between both parts -1- and -2-.

The support -1- has an adornment -1a- in the center where the initials of the vehicle, anagram, etc. are shown.

Opening of the shelf -2- is made by sliding the two axles -4- and -5-, placed on the respective sides of the support -1-, which are located inside lateral grooves -6- in the form of runners inserted in said shelf -2-, so that when the shelf -2- is pulled to the bottom of said runners -6- it turns around the axles -4- and -5- until it becomes placed in the horizontal position, obtaining stability in said position by means of a butt -7- that rests on the support -1- and a side support -8- located at the level of the axles.

The end of the axles has a sloping surface forming a certain angle with the horizontal and serves as a support for the shelf -2-, which adopts a complementary surface on the lower end of the bottom of the strip.

Closing of the shelf -2- includes placing it in the vertical position and then applying a slight pressure downwards on its upper part in order to make it close.

The shelf has an accessory that makes it become loose in the event of overloading. This consists in providing the support with a mechanism including the movable axle -4- placed on the corresponding side, whilst the axle -5- of the other side is fixed. This system in included in a box -12- and is controlled by means of a spring -9- that permits the movable axle -4- to slide sideways so that, as the load applied on the shelf is increased, said spring -9- starts to become compressed and causes the axle to be withdrawn and forces the shelf to slide along the sloping surface of the axle towards the end, so that when there is a certain load the distance traveled by the axle is such that the support is not sufficient and the shelf becomes unhooked and falls, without the set suffering any damage.

The shelf -2- can be mounted again on the support -1- if the fixed axle is placed on the corresponding side at the bottom of the groove of the shelf, whilst the lower part of the shelf is placed on the other side on top of the movable axle -4- in such a way that the movable axle -4- is forced to enter into its box -12- to permit the shelf -2- to descend, thus permitting it to be housed in the runner -6- and the set is able to used again.

In order to mount the support -1- on the frame of the seat -3-, this has two arches -10- on the back part that are installed in the supports -11- of the headrest of the seat -3-, whilst anchoring on the cross piece is made with the help of two anchoring points placed on the ends of the part, in the curved area, underneath the adornment and hidden by the shelf.

Good operation of the support is ensured by means of a centering piece housed on top of said cross piece, on the invisible face, avoiding tilting of the part during mounting.

Finally, the shelf -2- has a glass-holder orifice -13- and a side hook -14- to hang a bag or another object.

## Claims

1. Shelf for the back part of the backrest in a vehicle, consisting of two parts, one fixed part which corresponds to a support (1) that secures the shelf (2) and is attached to the frame of the seat (3), and the shelf (2) itself which is mounted on the support (1), wherein two axles (4, 5) are placed on the sides of the support (1), said axles being suitable to be received inside lateral grooves (6) in the form of runners provided for this purpose in the shelf (2), so that when the shelf (2) is pulled to the bottom of said runners (6), it turns around the axles (4, 5) until becoming placed in the horizontal position, obtaining stability in said position by means of stops which are provided on the support, said shelf being **characterized in that**
- said two parts (1, 2) are made of molded material;
- the shelf (2) is mounted on the support (1) in such a way that two stable positions of the shelf can be adopted, one unfolded for its use and the other one folded, in the closed position, thus obtaining a perfect adjustment between both parts (1, 2);
- the end of the axles (4, 5) has a sloping surface forming a certain angle with the horizontal and serving as a support for the shelf (2) which adopts a complementary surface on the lower end of the bottom of the molded part (2);
- and opening of the shelf (2) is performed by means of sliding said two axles (4, 5) inside the lateral grooves (6) of the shelf;
- stability in the horizontal position is obtained by means of a butt (7) of the shelf that rests on support (1), and a side support (8) located at the level of the axles (4, 5); and
- placing the shelf (2) in its vertical position and applying downwards pressure on its upper part makes the shelf close.

2. Shelf according to claim 1, **characterized in that** it has an accessory that causes the shelf to become loose in the case of overload, wherein said accessory consists in providing the support (1) with a mechanism including a movable axle (4) on one side of the shelf whilst the axle (5) on the other side is fixed, and said mechanism is integrated in a box (12) and is controlled by a spring (9) that allows the movable axle (4) to slide sideways so that when the load applied on the shelf (2) is increased, said spring (9) starts to become compressed, causing the axle (4) to be withdrawn and forcing the shelf (2) to slide along the sloping surface of the axle towards the end, so that when there is a certain load, the distance travelled by the axle is such that the support is not sufficient and the shelf becomes unhooked and becomes loose.

3. Shelf according to claim 2, **characterized in that** subsequent mounting of the shelf (2) on the support (1) can be achieved by placing the fixed axle (5) at the bottom of the groove of the shelf, placing the lower part of the shelf on the movable axle (4) and applying pressure on the upper part of the shelf (2) in such way that the movable axle (4) is forced to enter into its box (12) to permit the shelf to descend and thus permitting the shelf to be housed in the runner (6).

4. Shelf according to any one of claims 1 to 3, **characterized in that** mounting of the support (1) on the frame of a seat (3) is made by means of two arches (10) on the back part which are suitable for inserting into the supports (11) of the corresponding headrest of the seat (3), whilst anchoring to the cross piece is made by means of two anchoring points located on the ends of the part and hidden by the shelf, and a centering piece housed on the crosspiece, on the invisible face, is provided to avoid tilting of the part during mounting, thus guaranteeing correct operation of the support.

## Patentansprüche

1. Regal für die Hinterseite der Rückenlehne eines Fahrzeugs, bestehend aus zwei Teilen, nämlich einem festen Teil, der einer Halterung (1) entspricht, welche den Regalboden (2) sichert und an dem Rahmen des Sitzes (3) befestigt ist, und dem Regalboden (2) selbst, der in der Halterung (1) montiert ist, wobei zwei Achsen (4, 5) an den Seiten der Halterung (1) angeordnet sind, diese Achsen zur Aufnahme in seitlichen Nuten (6) in Form von Führungsnuten geeignet sind, welche zu diesem Zweck in dem Regalboden (2) vorgesehen sind, so dass sich der Regalboden (2), wenn er bis zum unteren Ende der Führungsnuten (6) gezogen wird, um die Achsen (4, 5) dreht, bis er in der horizontalen Lage angeordnet ist, wobei die Stabilität in dieser Lage mittels auf der Halterung vorgesehener Anschläge erreicht wird, **dadurch gekennzeichnet, dass**
- die besagten zwei Teile (1, 2) aus geformtem Material bestehen;
- der Regalboden (2) in der Halterung (1) derart gelagert ist, dass zwei stabile Lagen des Regalbodens erhalten werden können, nämlich eine ausgeklappte für den Gebrauch und eine andere, zusammengeklappte in der geschlossenen Position, wodurch eine perfekte Einstellung der beiden Teile (1, 2) erzielt wird;
- das Ende der Achsen (4, 5) eine geneigte Fläche aufweist, die in einem bestimmten Winkel zur Horizontalen steht und als Auflage für den Regalboden (2) dient, welcher eine komplementäre Fläche an dem unteren Ende der Unterseite des geformten Teils (2) aufweist;
- und dass das Öffnen des Regals (2) durch Gleiten der beiden Achsen (4, 5) in den seitlichen Nuten (6) des Regalbodens erfolgt; und
- die Stabilität in der horizontalen Lage mittels eines stumpfen Endes (7) des Regalbodens bewirkt wird, welches auf der Halterung (1) ruht, sowie mittels einer seitlichen Stütze (8), die sich in Höhe der Achse (4, 5) befindet; und
- durch Anordnen des Regalbodens (2) in dessen vertikaler Lage und Ausüben eines nach unten gerichteten Druckes auf den oberen Teil des Regalbodens das Schließen des Regals bewirkt wird.

2. Regal nach Anspruch 1, **dadurch gekennzeichnet, dass** es eine Hilfseinrichtung aufweist, welche bewirkt, dass sich der Regalboden bei Überbelastung löst, wobei diese Hilfseinrichtung darin besteht, dass die Halterung (1) mit einem Mechanismus versehen ist, der auf einer Seite des Regals eine bewegliche Achse (4) aufweist, während die Achse (5) auf der anderen Seite fest ist, und der besagte Mechanismus in einem Gehäuse (12) integriert ist und durch eine Feder (9) gesteuert wird, welche ein seitliches Gleiten der beweglichen Achse (4) ermöglicht, so dass bei Erhöhung der auf den Regalboden (2) wirkenden Last die Feder (9) komprimiert wird, wodurch sich die Achse (4) zurückzieht und ein Gleiten des Regalbodens (2) entlang der geneigten Fläche der Achse zum Ende hin bewirkt wird, so dass bei Vorliegen einer bestimmten Last die von der Achse zurückgelegte Fläche so groß ist, dass die Stütze nicht mehr ausreicht und das Regal ausgehakt und lose wird.

3. Regal nach Anspruch 2, **dadurch gekennzeichnet, dass** die nachfolgende Montage des Regalbodens (2) an der Halterung (1) erfolgen kann durch Anordnen der festen Achse (5) an dem unteren Ende der Nut des Regalbodens, Anordnen des unteren Teils des Regalbodens auf der beweglichen Achse (4) und Ausüben eines Druckes auf den oberen Teil des Regalbodens (2), derart dass die bewegliche Achse (4) in ihr Gehäuse (12) gezwungen wird, um ein Absenken des Regalbodens und somit die Anordnung des Regalbodens in der Führungsnut (6) zu ermöglichen.

4. Regal nach einem der Ansprüche 1 bis 3, **dadurch gekennzeichnet, dass** die Montage der Halterung (1) an dem Rahmen des Sitzes (3) mittels zweier Bögen (10) auf der Hinterseite erfolgt, welche zum Einführen in die Stützen (11) der entsprechenden Kopfstütze des Sitzes (3) geeignet sind, während die Verankerung an dem Querstück mittels zweier Verankerungsstellen erfolgt, die sich an den Enden des Teiles befinden und durch das Regal verdeckt sind, und dass ein auf dem Querstück, auf der unsichtbaren Seite, angebrachtes Zentrierstück vorgesehen ist, um eine Neigung des Teiles während der Montage zu vermeiden, wodurch eine korrekte Funktion der Halterung gesichert ist.

## Revendications

1. Tablette destinée à la partie arrière du dossier dans un véhicule, constituée de deux parties, une partie fixe qui correspond à un support (1) qui maintient la tablette (2) et est attaché au cadre du siège (3), et la tablette (2) elle-même qui est montée sur le support (1), où deux pivots (4, 5) sont placés sur les côtés du support (1), lesdits pivots étant adaptés pour être reçus à l'intérieur de rainures latérales (6) sous la forme de glissières prévues à cet effet dans la tablette (2) de telle sorte que quand la tablette (2) est tirée vers le bas desdites glissières (6), elle tourne autour des pivots (4, 5) jusqu'à ce qu'elle soit placée dans la position horizontale, obtenant de la stabilité dans ladite position au moyen de butées qui sont prévues sur le support, ladite tablette étant **caractérisée en ce que**
- lesdites deux parties (1, 2) sont faites de matériau moulé ;
- la tablette (2) est montée sur le support (1) de telle manière que deux positions stables de la tablette peuvent être adoptées, l'une dépliée pour son usage et l'autre pliée, dans la position fermée, obtenant ainsi un ajustement parfait entre les deux parties (1, 2) ;
- l'extrémité des pivots (4, 5) comporte une surface en biseau formant un certain angle avec l'horizontale et servant de support à la tablette (2) qui adopte une surface complémentaire sur l'extrémité inférieure du bas de la partie moulée (2) ;
- et l'ouverture de la tablette (2) s'effectue en faisant glisser lesdits deux pivots (4, 5) à l'intérieur des rainures latérales (6) de la tablette ;
- la stabilité dans la position horizontale est obtenue au moyen d'un about (7) de la tablette qui repose sur le support (1), et d'un support de côté (8) situé au niveau des pivots (4, 5) ; et
- le fait de placer la tablette (2) dans sa position verticale et d'exercer une pression descendante sur sa partie supérieure fait se fermer la tablette.

2. Tablette selon la revendication 1, **caractérisée en ce qu'**elle comporte un accessoire qui amène la tablette à se relâcher dans le cas d'une surcharge, où ledit accessoire consiste à équiper le support (1) d'un mécanisme incluant un pivot mobile (4) sur un côté de la tablette alors que le pivot (5) sur l'autre côté est fixe, et ledit mécanisme est intégré dans une boîte (12) et il est contrôlé par un ressort (9) qui permet au pivot mobile (4) de glisser de côté de telle sorte que lorsque la charge appliquée sur la tablette (2) augmente, ledit ressort (9) commence à se comprimer, amenant le pivot (4) à se retirer et forçant la tablette (2) à glisser le long de la surface plongeante du pivot vers l'extrémité, de telle sorte que lorsqu'il y a une certaine charge, la distance parcourue par le pivot est telle que le support n'est pas suffisant et la tablette se décroche et se relâche.

3. Tablette selon la revendication 2, **caractérisée en ce qu'**un montage ultérieur de la tablette (2) sur le support (1) peut être réalisé en plaçant le pivot fixe (5) au bas de la rainure de la tablette, en plaçant la partie inférieure de la tablette sur le pivot mobile (4) et en appliquant une pression sur la partie supérieure de la tablette (2) d'une manière telle que le pivot mobile (4) est forcé à entrer dans sa boîte (12) pour permettre à la tablette de descendre et permettre ainsi à la tablette de prendre place dans la glissière (6).

4. Tablette selon l'une quelconque des revendications 1 à 3, **caractérisée en ce que** le montage du support (1) sur le cadre d'un siège (3) est effectué au moyen de deux arcs (10) sur la partie arrière qui sont adaptés pour s'insérer dans les supports (11) de l'appuie-tête correspondant du siège (3), alors que l'ancrage à la pièce transversale est réalisé au moyen de deux points d'ancrage situés sur les extrémités de la partie et cachés par la tablette, et une pièce de centrage ménagée sur la pièce transversale, sur la face invisible, est prévue pour éviter l'inclinaison de la partie durant le montage, garantissant ainsi un fonctionnement correct du support.
